# EUROPEAN PATENT APPLICATION

(11) **EP 1 976 151 A1**
(43) Date of publication of application: **01.10.2008**
(21) Application number: 07251383.1
(22) Date of filing: 30.03.2007
(51) Int. Cl.: H04B 7/08

(54) **Diversity receiver with monitoring performance of diversity branch and adjusting method thereof**

(71) Applicant: Afa Technologies, Inc., Hsin Tien Taipei County 231 (TW)
(72) Inventor: Fu, Po-Wei, Banciao City Taipei County 220 (TW); Hsu, Chen-Chu, Chongke Village, Dongshih Township Taichung County 423 (TW)
(74) Representative: Chamberlain, Alan James

(57) **Abstract**

A diversity receiver and an adjusting method thereof are provided. According to the method, the quality of every diversity signal received by various diversity branches are monitored according to pilot error rate of each received diversity signal, and the weightings of the signals provided by the diversity branches in a diversity output signal are adjusted timely. Therefore, the diversity receiver can continually output a good-quality signal.

## Description

### BACKGROUND OF THE INVENTION

### Field of the Invention

The present invention relates to a diversity reception technology. More particularly, the present invention relates to a method of adjusting a diversity receiver by pilot error rate (PER).

### Description of Related Art

In a wireless communication system, diversity reception is an effective technique for improving receiver performance. By receiving multiple signal copies from different diversity branches, the probability of simultaneous deep signal fading is small when signals received by these branches are statistically uncorrelated. Accordingly, as the number of diversity branches increases, the receiver becomes more robust against signal fading. This technique is especially useful in mobile wireless communication environments, where the signal quality can be highly degraded and time-varying due to Doppler fading effect caused by relative movement between the transmitter and the receiver and frequency-selective fading effect.

Space diversity is commonly applied in wireless systems, where two or more antennas are employed in the diversity receiver to receive signals carrying identical information. Selection Diversity and Combining Diversity are two widely adopted methods for processing the received signals.

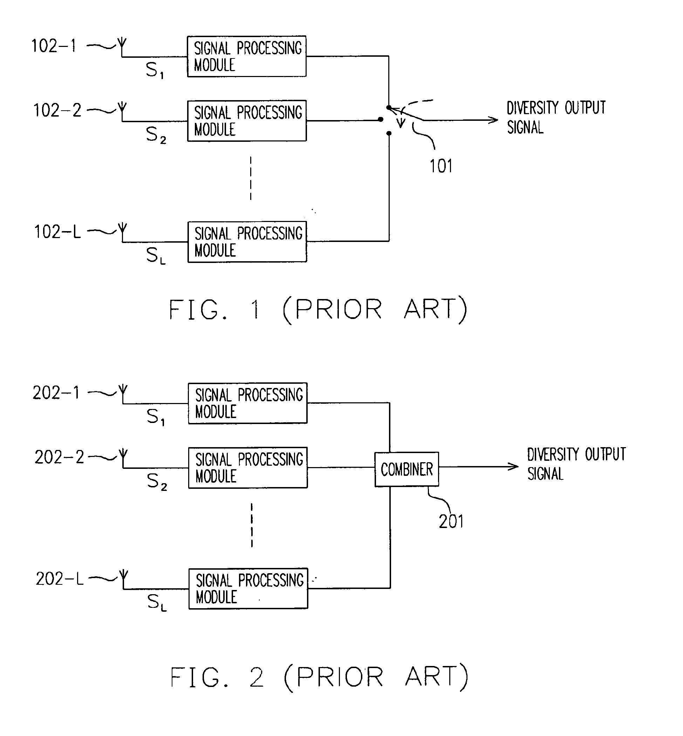

For example, L (L is an integer greater than 1) diversity branches are employed, and each diversity brand includes an antenna and a signal processing module. FIG. 1 is a block diagram illustrating selection diversity. Referring to FIG. 1, Selection Diversity selects the best signal as the output signal of the diversity receiver from the diversity signals S₁~S_{L} received by the antennas 102-1~102-L by controlling the switching of the selector 101. FIG. 2 is a block diagram illustrating combining diversity. Referring to FIG. 2, Combing Diversity combines all diversity signals S₁~S_{L} with different weightings according to the signal qualities of the antennas 202-1~202-L by using the combiner 201.

However, actually the signal quality of any diversity branch may be unsatisfying due to the variations in wireless communication channels. Such invalid signals provide weeker information to the receiver, or they may even destroy the signal combined and output by the combining module or reduce the selectivity of the diversity selector, accordingly reduce the performance of the entire diversity receiver. Accordingly, monitoring and utilizing the signal quality of each diversity branch is very critical in diversity reception systems.

Conventionally, the method for controlling diversity combining is to monitor the quality or performance of the output signal in the circuit next to the combining module. When the quality of the signal output by the combining module is not acceptable to the backend processing, the diversity receiver is forced to perform a retraining and the weightings of various branch signals are updated through necessary calculations, so that the combining module can continue to output good-quality signals. The receiver cannot valid signal temporarily during the retraining of the entire diversity receiver. Since all the diversity branches are forced to perform retraining at the same time no matter any of these diversity branches can still provide good-quality signal, the conventional technique is less efficient and extra power is thus consumed by unnecessary retraining. Besides, the diversity receiver cannot change the weightings of various diversity signals timely when the transmission channel varies time to time without monitoring the signal quality of each diversity branch, thus, some diversity signals may be combined inappropriately and the diversity receiver cannot detect such situation at all.

Presently the Japan. Patent No. JP2004135120, the U.S. Patent No. US5465271, and the U.K. Patent No. GB1065473 respectively disclose the technique for estimating the quality of each diversity branch and determining the weightings according to the estimations based on automatic gain control values, signal-to-interference-plus-noise ratio (SINR) of every diversity branch seen in the combiner, and signal noise ratio (SNR) of every diversity branch seen in the combiner. Moreover, the U.S. Patent No. US6266528 discloses a method and an apparatus for monitoring antennas, wherein whether any antenna is invalid antenna is judged according to the average power of signals received by each antenna. However, the foregoing methods and apparatus cannot monitor signal quality received by every diversity branch effectively or simply.

### SUMMARY OF THE INVENTION

Accordingly, the present invention is directed to provide a method for monitoring and adjusting a diversity receiver, wherein the weightings of various diversity signals in the diversity output signal are adjusted timely through simple calculation so that the diversity signals can be combined correctly.

According to another aspect of the present invention, a diversity receiver is provided. The diversity receiver can monitor signal quality in every diversity branch and can timely adjust the weightings of various diversity signals in the diversity output signal without terminating the output of the diversity receiver, so that the diversity receiver can continuously output signals of good quality.

To achieve the aforementioned and other objectives, the present invention provides a method of adjusting diversity receiver for receiving a plurality of diversity signals and outputting a diversity output signal. According to the method, the corresponding pilot error rate (PER) of each diversity signal is calculated by using the pilot in the diversity signal, then the weightings of various diversity signals in the diversity output signal are adjusted by using the PERs of the diversity signals, and the adjusted diversity' signals are combined to output the diversity output signal.

To achieve aforementioned and other objectives, the present invention further provides a diversity receiver for outputting a diversity output signal. The diversity receiver includes a plurality of diversity branches and a combining module. Each of the diversity branches includes an antenna, a signal processing module, and a diversity quality monitoring module. Wherein the antenna receives the diversity signal of a diversity branch. The signal processing module is electrically connected to the antenna for processing and demodulating the diversity signal of a diversity branch. The diversity quality monitoring module is electrically connected to the signal processing module and detects the PER of the diversity signal through the pilot in the signal of the diversity branch. The combining module is electrically connected to the diversity branches. The combining module adjusts the weightings of the diversity signals in the diversity output signal by using the PERs of the diversity signals and combines the adjusted diversity signals to output the diversity output signal.

According to the present invention, the PERs of various diversity branches can be obtained through simple calculations, thus, the qualities of the diversity signals in the diversity branches can be monitored constantly, so that the weightings of diversity signals in the diversity output signal can be adjusted without complex information exchange or centralized control between the diversity branches, and the diversity receiver can continuously output signals of good qualities.

In order to make the aforementioned and other objects, features and advantages of the present invention comprehensible, a preferred embodiment accompanied with figures is described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a block diagram illustrating Selection Diversity.

FIG. 2 is a block diagram illustrating Diversity Combining.

FIG. 3 is a flowchart illustrating the method of adjusting a diversity receiver according to an embodiment of the present invention.

FIG. 4 is a detailed flowchart illustrating the step S330 in the method of adjusting a diversity receiver according to an embodiment of the present invention.

FIG. 5 is a flowchart illustrating the method of judging whether there is any invalid signal in a plurality of diversity signals according to an embodiment of the present invention.

FIG. 6 is a schematic block diagram of a diversity receiver according to an embodiment of the present invention.

FIG. 7 is a block diagram of the diversity branch 610-1 in a diversity receiver according to an embodiment of the present invention.

FIG. 8 is a block diagram of the diversity quality monitoring module 614-1 in a diversity receiver according to an embodiment of the present invention.

### DESCRIPTION OF EMBODIMENTS

Presently, diversity reception technology has been widely applied to communication receivers, wherein the receivers become more robust against signal fading by receiving multiple signal copies from different diversity branches. However, in wireless communication channels, since the signals received by various diversity branches are prone to different interferences and fading, or due to bad performance and inappropriate parameter selections of the some diversity branch, the output of some diversity signals may have bad qualities. Accordingly, the present invention provides a method for monitoring and adjusting diversity receiver; wherein the qualities of diversity signals are monitored respectively by using pilots in the diversity signals, so as to timely adjust the diversity output signal output by the diversity receiver. Besides, the present invention can be applied to various communication systems, such as orthogonal frequency division multiplex (OFDM) system, code division multiple access (CDMA) system, or other communication system.

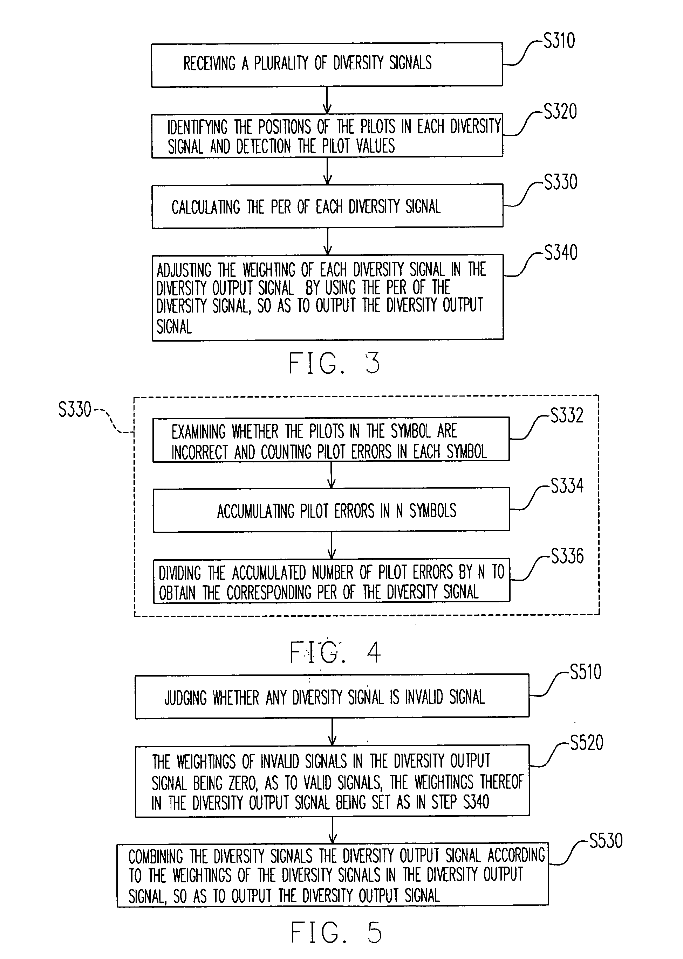

FIG. 3 is a flowchart illustrating the method of adjusting a diversity receiver according to an embodiment of the present invention. Referring to FIG. 3, first, a plurality of diversity branches in the diversity receiver respectively receives a plurality of diversity signals (step S310). Wherein, each diversity signal includes a plurality of symbols, and each symbol further includes at least one pilot. The positions and sizes of the pilots are known to both the receiver and the transmitter.

Next, the positions of the pilot in each diversity signal are identified, and the pilot values in each diversity signal are detected (step S320). In the present embodiment, the pilots may be, for example, continual pilots or scattered pilots. For example, if the present embodiment is applied to OFDM system, the pilots in the diversity signals may be, for example, distributed at different sub-carrier frequencies (i.e. scattered pilots) or at fixed sub-carrier frequencies (i.e. continual pilots). In step S320, the sub-carrier frequency whereat the pilots are distributed is identified through a pilot table.

After that, the PER corresponding to each diversity signal is calculated (step S330). In step S330, the steps for calculating the PER of each diversity signal are the same, thus, the detailed steps of step S330 regarding any diversity signal will be described below.

FIG. 4 is a detailed flowchart illustrating the step S330 in the method of adjusting a diversity receiver according to an embodiment of the present invention. Referring to FIG. 4, in step S330, whether pilots in the symbols are incorrect are detected, and the pilot errors in each symbol are counted (step S332). After that, the pilot errors in N symbols are accumulated (step S334), and the total number of pilot errors of the N symbols is divided by N so as to obtain the PER of the N symbols, which is, the corresponding PER of the diversity signal (step S336). Wherein N is an adjustable positive integer and the value thereof is determined according to the number of symbols to be processed.

Next, referring to FIG. 3, after obtaining the corresponding PER of each diversity signal, the weighting of each diversity signal in the diversity output signal is adjusted by using the PER of the diversity signal, and the adjusted diversity signals are combined to output the diversity output signal (step S340). However, in step S340 of the present embodiment, the methods of combining the diversity signals may be further categorized into selection diversity and diversity combining. Steps of the two methods will be respectively described below.

When selection diversity is used for combining the diversity output signal, in step S340, one of the diversity signals is selected as the diversity output signal by using the PERs of the diversity signals. That is, the selected diversity signal has the whole weighting in the diversity output signal (or it weighting is 100%). The selected diversity signal has the smallest PER among all the diversity signals.

When diversity combining is used for combining the diversity signals, in step S340, the weightings of the diversity signals in the diversity output signal are calculated according to the reciprocal ratio of the PERs in the diversity signals, and then the diversity signals are combined as the diversity output signal according to the weightings of the diversity signals in the diversity output signal. As described above, if the number of the diversity signals is L and the reciprocals of the PERs of the diversity signals are respectively 1/PER₁, 1/PER₂, ..., 1/PER_{L}, the weightings of the diversity signals in the diversity output signal are respectively denoted as α₁, α₂, ..., α_{L}, then the relation between the weightings of the diversity signals in the diversity output signal and the PERs thereof is α₁:α₂: ...:α_{L} = 1/PER₁:1/PER₂: ...:1/PER_{L}.

However, in very undesirable wireless communication channels, a plurality of diversity signals received by the diversity receiver may have been damaged seriously, so as to cause one to multiple diversity signals invalid and further to affect the performance of diversity reception, thus, according to the method of adjusting diversity receiver in the present invention, if there is any invalid signal in a plurality of diversity signals can be known by using the number of pilot errors in the symbols.

FIG. 5 is a flowchart illustrating the method of judging whether there is any invalid signal in a plurality of diversity signals according to an embodiment of the present invention. Referring to FIG. 5, since the numbers of pilot errors in various symbols have been counted respectively in step S330, whether any of the diversity signals is invalid is judged in step S510. As to the definition of invalid signal, when more than K symbol errors occur continuously to a particular diversity signal in the diversity signals, the particular diversity signal is considered invalid, and the symbol error represents that the number of pilot errors in the symbol is greater than M. For example, when K=5 and M=3, in a particular diversity signal (i.e. the aforementioned particular diversity signal), the numbers of pilot errors in 6 continuous symbols are all greater than 3, thus, the diversity signal is an invalid signal.

The foregoing K and M are both adjustable integers, and the value of M is determined according to the designed tolerable number of pilot errors in each symbol in the receiver, the value of K is determined according to the designed tolerable number of continuous symbol errors in each diversity signal in the receiver.

Next, the weightings of the diversity signals which have been determined as invalid signals in the diversity output signal are set to zero, and the weightings of the diversity signals which have been determined as valid signals in the diversity output signal are set according to the corresponding PERs thereof as in step S340 (step S520). Finally, the diversity signals are combined into the diversity output signal according to the weightings of the diversity signals in the diversity output signal (step S530). Certainly, when there is no invalid signal in the diversity signals, the weightings of all the diversity signals in the final signal are not zero, which is, all the diversity signals contribute to the diversity output signal.

It can be understood from the embodiment described above that in the present invention, the qualities of various diversity signals can be monitored and the diversity output signal output by the diversity receiver can be adjusted by only calculating the PERs of the diversity signals. When there are invalid signals in the diversity signals, the invalid diversity branches can be identified instantly, and the weightings thereof can be reduced or set to zero, so that the invalid signals won't affect the final output of the diversity receiver.

It should be mentioned that even though a possible pattern of the method for adjusting diversity receiver has been described in the present embodiment, it should be understood by those skilled in the art that the design of diversity receiver varies with manufacturers, thus, application of the present invention should not be limited to the possible pattern. In other words, the spirit of the present invention is met as long as the qualities of received signal are monitored through PERs thereof. Embodiments of the diversity receiver provided by the present invention will be described below.

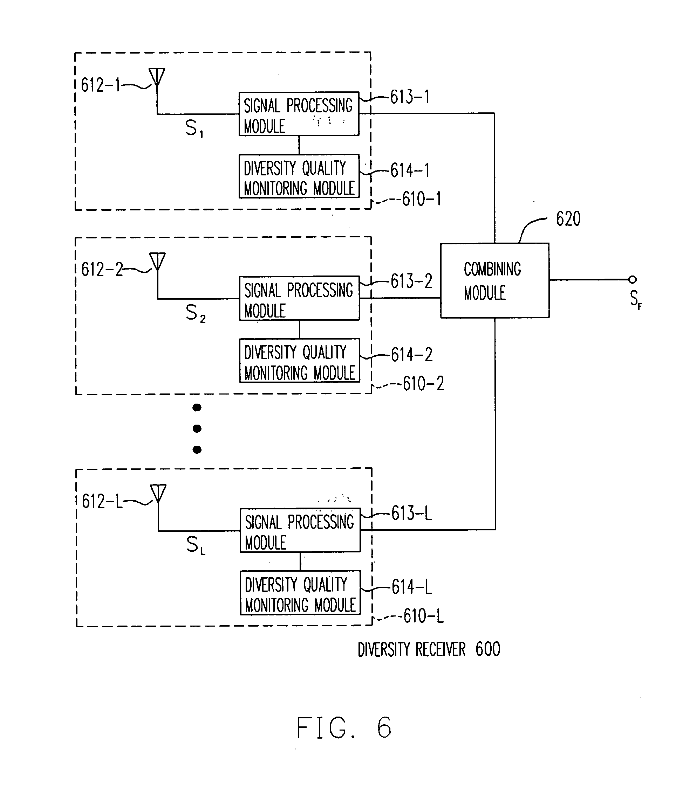

FIG. 6 is a schematic block diagram of a diversity receiver according to an embodiment of the present invention. Referring to FIG. 6, the diversity receiver 600 includes a plurality of diversity branches 610-1~610-L and a combining module 620. Wherein each diversity branch includes a diversity antenna, a signal processing module, and a diversity quality monitoring module. For example, the i^{th} diversity branch 610-i includes a diversity antenna 612-i, a signal processing module 613-i, and a diversity quality monitoring module 614-i, wherein i is 1~L. The diversity antenna 612-i receives the diversity signal Sᵢ. The signal processing module 613-i is electrically connected to the diversity antenna 612-i for processing and demodulating the diversity signal Sᵢ. The diversity quality monitoring module 614-i is electrically connected to the signal processing module 613-i and detects the pilot error rate PERᵢ of the diversity signal Sᵢ by using the pilots in the diversity signal Sᵢ. The combining module 620 is electrically connected to the diversity branches 610-1-610-L. The combining module 620 adjusts the weightings of the diversity signals S₁~S_{L} in the diversity output signal S_{F} by using the pilot error rates PER₁~PER_{L} of the diversity signals S₁~S_{L} and combines the adjusted diversity signals S₁~S_{L} so as to output the diversity output signal S_{F}.

Since in the present embodiment, the implementations of the diversity branches 610-1~610-L are all the same, the implementations thereof will be described below with the diversity branch 610-1 as example. For the convenience of description, below a DVB-T receiver (which is an OFDM system) is used for explaining the embodiment of the diversity receiver in the present invention, however, it should be understood by those skilled in the art that the present invention may also be applied to CDMA or other system.

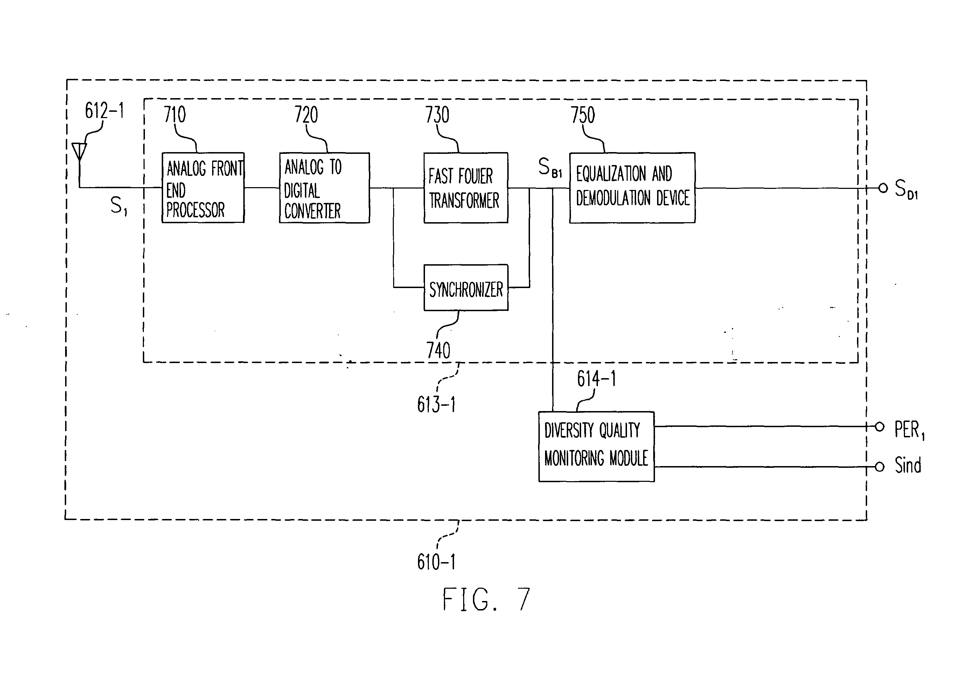

FIG. 7 is a block diagram of the diversity branch 610-1 in a diversity receiver according to an embodiment of the present invention. Referring to FIG. 7, the signal processing module 613-1 included in the diversity branch 610-1 includes an analog front end (AFE) processor 710, an analog digital converter (ADC) 720, a fast Fouier transform (FFT) 730, a synchronizer 740, an equalization and demodulation device, and a diversity quality monitoring module 614-1.

After the diversity antenna 612-1 receives the diversity signal S₁, the diversity signal S₁ is passed through the AFE processor 710 so as to transform and adjust the size of the diversity signal S₁ on the main carrier, and then the analog diversity signal S₁ is converted into a digital diversity signal S₁ through the ADC 720. The digital diversity signal S₁ is then converted from time domain into frequency domain by the FFT 730. The synchronizer 740 is coupled to the I/O terminals of the FFT 730 so as to synchronize signal reception and transmission. After that, the diversity signal S₁ passed through the FFT 730 is further passed through the equalization and demodulation device 750 to compensate channel effect and demodulate the diversity signal S₁, and the equalization and demodulation device 750 outputs a demodulated diversity signal S_{D1} to the combining module 620.

In the present embodiment, the diversity quality monitoring module 614-1 is electrically connected to the output terminal of the FFT 730 and receives a signal output by the FFT 730. The diversity quality monitoring module 614-1 can find out the corresponding PER of the diversity signal S₁ by using the received signal and adjust the weighting of the diversity signal S₁ in the diversity output signal S_{F}.

It should be understood by those skilled in the art that the diversity quality monitoring module 614-1 may also be coupled to the equalization and demodulation device 750, the diversity branch 610-1, and other circuit blocks to obtain the PER and adjust the weighting of the diversity signal S₁ in the diversity output signal S_{F}. Below components in the diversity quality monitoring module 614-1 will be described in detail.

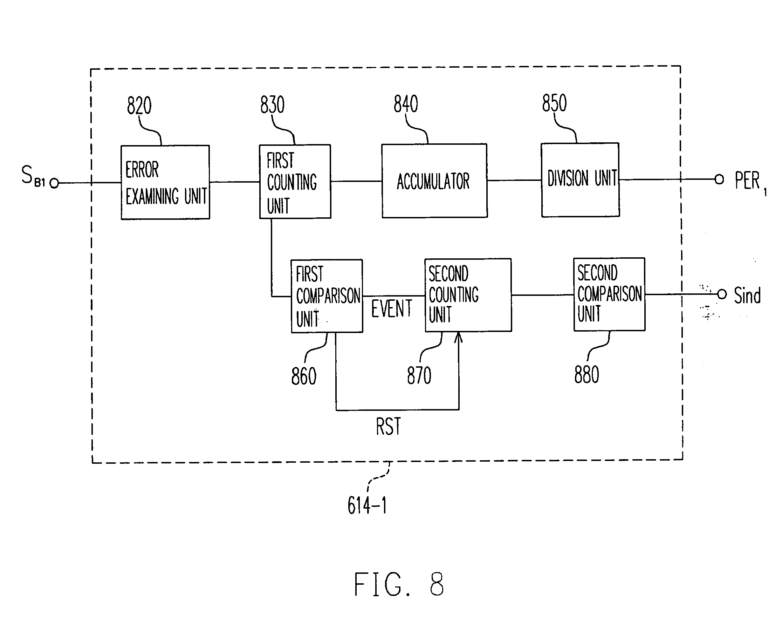

FIG. 8 is a block diagram of the diversity quality monitoring module 614-1 in a diversity receiver according to an embodiment of the present invention. Referring to FIG. 8, the diversity quality monitoring module 614-1 includes an error examining unit 820, a first counting unit 830, an accumulation unit 840, and a division unit 850.

The error examining unit 820 is electrically connected to the output terminal of the FFT 730 to receive signals output by the FFT 730, and the error examining unit 820 obtains the sub-carrier position and value of pilot in the diversity signal through pilot table and determines whether the received pilot is incorrect. The DVB-T system transmits pilots with boosted power in tones of fixed freuqnecy positions, thus, the pilot errors can be reliably through the error examining unit 820 .

Here assuming the pilot is modulated on the sub-carrier by binary phase shift keying (BPSK), then taking the signal output by the FFT 730, the error examining unit 820 demodulates the signal on the sub-carrier whereon the pilot is BPSK modulated through the pilot table, and then checks whether the result thereof is correct.

The first counting unit 830 is electrically connected to the error examining unit 820 for counting pilot errors in every symbol of the baseband signal S_{B1}, within the baseband signal S_{B1} is the output signal of FFT 730.

The accumulation unit 840 is electrically connected to the first counting unit 830, when the accumulation unit 840 receives the number of pilot errors in a symbol of the baseband signal S_{B1}, the accumulation unit 840 accumulates the number in its internal register, and when the accumulation unit 840 has received the results of N symbols, the accumulation unit 840 outputs the number of pilot errors in N symbols and nulls the internal register thereof so as to continue to accumulate subsequent numbers of pilot errors in N symbols. Wherein N is an adjustable positive integer and the value thereof can be determined according to the number of symbols to be processed.

The division unit 850 is electrically connected to the accumulation unit 840. The division unit 850 receives the number of pilot errors in N symbols output by the accumulation unit 840 and divides the number by N as the PER in the baseband signal S_{B1}, and the PER is the PER of the diversity signal S₁. It should be understood by those skilled in the art that if N is power of 2, the division unit 850 can be implemented by bit-shifting, and bit-shifting is a well-known technique in the art therefore will not be described herein.

There may be one or multiple diversity signals received by the diversity receiver invalid due to bad reception qualities thereof, thus, the diversity receiver in the present invention further includes a first comparison unit 860, a second counting unit 870, and a second comparison unit 880 to find out whether the diversity signal S₁ is invalid signal. Wherein the first comparison unit 860 is electrically connected to the first counting unit 830 and receives the number of pilot errors in each symbol of the baseband signal S_{B1} output by the first counting unit 830. When the first comparison unit 860 receives the number of pilot errors in a symbol, the first comparison unit 860 compares whether the number is greater than M, if so, the first comparison unit 860 outputs an event signal EVENT. Otherwise, if the number is not larger than M then the first comparison unit 860 outputs a reset signal RST. Wherein M is an adjustable integer and the value thereof can be determined according to the expected tolerable number of pilot errors of each symbol. Accordingly, the event signal EVENT represents that there are too many pilot errors in the currently received symbol of the baseband signal S_{B1}, thus, the symbol is considered an error symbol, and the reset signal RST represents that the number of continuous error symbols will be counted again.

The second counting unit 870 is electrically connected to the first comparison unit 860 and receives the event signal EVENT and the reset signal RST. The second counting unit 870 counts the occurrences of the event signal EVENT and outputs the statistic result, and the second counting unit 870 resets the statistic result according to the reset signal RST. Accordingly, the statistic result denotes the number of continuous error symbols.

The second comparison unit 880 is electrically connected to the second counting unit 870 and receives the statistic result output by the second counting unit 870. The second comparison unit 880 outputs an indicating signal S_{ind} according to the statistic result, and when the statistic result is greater than K, the second comparison unit 880 enables the indicating signal S_{ind}. Wherein K is an adjustable integer and the value thereof can be determined according to the expected tolerable number of continuous error symbols in each baseband signal S_{B1}. The combining module 620 is notified that the demodulated diversity signal S_{D1} output by the signal processing module 613-1 is invalid when the indicating signal S_{ind} is enabled, so that the diversity output signal S_{F} does not contain the diversity signal S_{D1}, that is, the weighting of the diversity signal S₁ in the diversity output signal S_{F} is set to zero.

According to an embodiment of the present invention, the combining module 620 may include selection diversity and combining diversity, thus, the implementations of the combining module 620 will be particularly described below.

When selection diversity is used for implementing the combining module 620, the combining module 620 includes a selector. The selector directly selects the diversity signal of the smallest PER from the diversity signals 612-1~612-L as the diversity output signal S_{F} based on the pilot error rates PER₁~PER_{L} of the diversity signals 612-1~612-L, which is, the weightling of the selected diversity signal is 100% as the diversity output signal.

When diversity combining is used for implementing the combining module 620, the combining module 620 calculates the weightings of the diversity signals in the diversity output signal S_{F} according to the reciprocal of the pilot error rates PER₁~PER_{L} of the diversity signals 612-1-612-L and combines the diversity signals 612-1~612-L into the diversity output signal S_{F}. As described above, if the reciprocals of the PERs of the diversity signals 612-1-612-L are respectively denoted as 1/PER₁, 1/PER₂, ..., 1/PER_{L}, and the weightings of the diversity signals 612-1~612-L in the diversity output signal S_{F} are respectively denoted as α₁, α₂, ..., α_{L}, then the relation between α₁, α₂, ..., α_{L} and 1/PER₁, 1/PER₂, ..., 1/PER_{L} is α₁:α₂: ...:α_{L}=1/PER₁:1/PER₂: ...:1/PER_{L}. Thus, after receiving the demodulated diversity signals S_{D1}~S_{DL} output by the diversity branches 610-1~610-L, the combining module 620 combines the demodulated diversity signals S_{D1}~S_{DL} into the diversity output signal S_{F} according to the corresponding weightings α₁, α₂, ..., α_{L} thereof, and the value of the diversity output signal S_{F} is α₁S_{D1}+α₂S_{D2}+...+α_{L}S_{DL}.

In overview, in the present invention, the qualities of signals received by the diversity branches are monitored and the weightings of the diversity signals in the diversity output signal are adjusted timely by using PERs of the diversity signals, so that the diversity receiver can continuously output signals of good quality. Moreover, when there are invalid signals in the diversity signals, the invalid signals can be identified instantly so that the invalid signals won't affect the final output of the diversity receiver.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A method for adjusting a diversity receiver, receiving a plurality of diversity signals and outputting a diversity output signal, the method comprising:
calculating the corresponding pilot error rate (PER) of each of the diversity signals by using the pilots in each of the diversity signals; and
adjusting the weighting of each of the diversity signals in the diversity output signal by using the PER of each of the diversity signals, combining the adjusted diversity signals so as to output the diversity output signal.

2. The method as claimed in claim 1, wherein the step of calculating the corresponding PER of each of the diversity signals by using the pilots in each of the diversity signals comprises:
identifying the positions of the pilots in each of the diversity signals and detecting the pilot value in each of the diversity signals;
examining whether the results of pilot detection in each of the diversity signals being incorrect;
regarding N symbols in each of the diversity signals, counting pilot errors in each symbol; and
averaging total pilot errors of the N symbols to obtain the corresponding PER of each of the diversity signals.

3. The method as claimed in claim 1, wherein the step of adjusting the weighting of each of the diversity signals in the diversity output signal by using the PER of each of the diversity signals and combining the adjusted diversity signals so as to output the diversity output signal further comprises:
judging whether any of the diversity signals being an invalid signal, wherein when the number of symbol errors occurred continuously in a particular diversity signal of the diversity signals is greater than K, then the particular diversity signal being the invalid signal, wherein the symbol error represents that the number of pilot errors contained in the symbol is greater than M; and
when the particular diversity signal being the invalid signal, the weighting of the particular diversity signal in the diversity output signal being zero.

4. The method as claimed in claim 1, wherein the step of adjusting the weighting of each of the diversity signals in the diversity output signal by using the PER of each of the diversity signals and combining the adjusted diversity signals to output the diversity output signal comprises:
calculating the weightings of the diversity signals in the diversity output signal according to the reciprocal ratio of the PERs in the diversity signals; and
combining the diversity signals according to the weightings of the diversity signals in the diversity output signal, outputting the diversity output signal.

5. The method as claimed in claim 1, wherein the step of adjusting the weighting of each of the diversity signals in the diversity output signal by using the PER of each of the diversity signals and combining the adjusted diversity signals to output the diversity output signal further comprises:
selecting one of the diversity signals as the diversity output signal by using the PER of each of the diversity signals, wherein the diversity output signal is the diversity that has the smallest PER among the diversity signals.

6. The method as claimed in claim 1 being suitable for orthogonal frequency division multiplex (OFDM) systems or code division multiple access (CDMA) systems.

7. A diversity receiver, outputting a diversity output signal, the diversity receiver comprising:
a plurality of diversity branches, wherein each of the diversity branches comprises:
an antenna, receiving a diversity signal;
a signal processing module, electrically connected to the antenna, processing and demodulating the diversity signal;
a quality monitoring module, electrically connected to the signal processing module, detecting the PER of the diversity signal by using the pilots of the diversity signal; and
a combining module, electrically connected to the diversity branches, adjusting the weightings of the diversity signals in the diversity output signal by using the PERs of the diversity signals and combining the adjusted diversity signals so as to output the diversity output signal.

8. The diversity receiver as claimed in claim 7, wherein the quality monitoring module comprises:
an error examining unit, electrically connected to the signal processing module, identifying and examining whether the pilot detections of the diversity signal passed through the signal processing module being incorrect;
a first counting unit, electrically connected to the error examining unit, counting pilot errors in each symbol of the diversity signal;
an accumulation unit, electrically connected to the first counting unit, accumulating the pilot errors in N symbols and outputting the result; and
a division unit, electrically connected to the accumulation unit, dividing the output of the accumulation unit by N as the PER of the diversity signal.

9. The diversity receiver as claimed in claim 8, wherein the quality monitoring module further comprises:
a first comparison unit, electrically connected to the first counting unit, comparing whether the number of pilot errors in each symbol of the diversity signal being greater than M, outputting an event signal if the number of pilot errors being greater than M, otherwise outputting a reset signal;
a second counting unit, electrically connected to the first comparison unit, counting the occurrences of the event signal, outputting a statistic result, resetting the statistic result according to the reset signal; and
a second comparison unit, electrically connected to the second counting unit, comparing whether the statistic result being greater than K, outputting an indicating signal, enabling the indicating signal when the statistic result being greater than K, wherein when the indicating signal is enabled, the weighting of the diversity signal in the diversity output signal is zero.

10. The diversity receiver as claimed in claim 7, wherein the combining module calculates the weightings of the diversity signals in the diversity output signal and combines the diversity signals so as to obtain the diversity output signal according to the reciprocal ratio of the PERs of the diversity signals.

11. The diversity receiver as claimed in claim 7, wherein the combining module comprises a selector which selects one of the diversity signals passed through the signal processing modules as the diversity output signal according to the PERs of the diversity signals, and the diversity output signal is the diversity signal that the smallest PER among the diversity signals.

12. The diversity receiver as claimed in claim 7 being suitable for OFDM systems or CDMA systems.
